(19) Europäisches Patentamt
European Patent Office
Office européen des brevets

(11) **EP 4 187 208 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **22208699.3**

(22) Anmeldetag: **22.11.2022**

(51) Internationale Patentklassifikation (IPC):
**G01D 3/08** (2006.01)    **G01D 5/20** (2006.01)

(52) Gemeinsame Patentklassifikation (CPC):
**G01D 5/2073; G01D 3/08**

(54) **ANORDNUNG UND VERFAHREN ZUR POSITIONSERFASSUNG MIT FEHLERERKENNUNG MIT EINEM LAGEGEBER**

ASSEMBLY AND METHOD FOR POSITION DETECTION WITH ERROR DETECTION WITH A POSITION SENSOR

DISPOSITIF ET PROCÉDÉ DE DÉTECTION DE POSITION AVEC DÉTECTION DE DÉFAUT AVEC UN CAPTEUR DE POSITION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **24.11.2021 AT 509392021**

(43) Veröffentlichungstag der Anmeldung:
**31.05.2023 Patentblatt 2023/22**

(73) Patentinhaber: **ABB Schweiz AG**
**5400 Baden (CH)**

(72) Erfinder:
• **Schachinger, Patrick**
**5142 Eggelsberg (AT)**
• **Schneider, Christian**
**5142 Eggelsberg (AT)**
• **Doppelhammer, Klaus**
**5142 Eggelsberg (AT)**
• **Reichhartinger, Roland**
**5142 Eggelsberg (AT)**

(74) Vertreter: **Patentanwälte Pinter & Weiss OG**
**Prinz-Eugen-Straße 70**
**1040 Wien (AT)**

(56) Entgegenhaltungen:
EP-A2- 2 078 933    DE-A1- 102015 211 232
US-A1- 2017 205 458

EP 4 187 208 B1

**Beschreibung**

Die Erfindung betrifft ein Verfahren zur Fehlererkennung beim Betreiben eines Lagegebers mit zumindest zwei Sekundärwicklungen, in die im Betrieb des Lagegebers von einer Erregungseinheit jeweils ein elektrisches Messsignal induziert wird und die Messsignale über jeweils eine Signalleitung an eine Auswerteeinheit übergeben werden und in der Auswerteeinheit ausgewertet werden, wobei an zumindest zwei Sekundärwicklungen ein elektrisches Störsignal angelegt wird, sodass das jeweilige elektrische Störsignal an der jeweiligen Sekundärwicklung jeweils ein dem jeweiligen Messsignal überlagertes Reaktionssignal auf der zugehörigen Signalleitung verursacht, und wobei die Reaktionssignale in der Auswerteeinheit zur Fehlererkennung ausgewertet werden. Die Erfindung betrifft auch eine entsprechende Anordnung zur Positionserfassung mit einem Lagegeber und mit Fehlererkennung.

Ein Resolver ist ein rotatorischer Lagegeber, der induktiv arbeitet und robust und kostengünstig ist, weshalb ein Resolver vielfältig eingesetzt wird. Ein Resolver ermöglicht die Erfassung der Winkellage eines Rotors des Resolvers. Wird der Rotor des Resolvers mit einem drehenden Bauteil, wie beispielsweise einer drehenden Welle einer Maschine, verbunden, dann kann damit die Winkellage oder Winkelgeschwindigkeit des Bauteils erfasst werden. Ein Beispiel einer typischen Anwendung eines Resolvers ist bei einem Elektromotor, um eine Lageinformation der Motorwelle zu erhalten. Die Kombination aus Elektromotor und Resolver wird oftmals auch als Servomotor bezeichnet. Die Lageinformation kann dann zur Regelung, beispielsweise einer Positionsregelung oder Geschwindigkeitsregelung, eines Servoantriebs bestehend aus dem Servomotor und einer damit angetriebenen Last verwendet werden. Es sind aber auch translatorische Lagegeber bekannt, die zur Lageerfassung zwischen einem translatorischen Bauteil und einem ortsfesten Bauteil dienen. Ein im Rahmen der gegenständlichen Erfindung betrachteter rotatorischer Lagegeber und ein translatorischer Lagegeber arbeiten nach dem gleichen, hinlänglich bekannten Messprinzip.

In einem Lagegeber gibt es eine magnetische Erregungseinheit, beispielsweise einen Permanentmagneten oder eine Erregerwicklung, die mit einem bewegten Bauteil mitbewegt wird und zumindest zwei, bezogen auf die Erregungseinheit feststehende Sekundärwicklungen. Die Erregungseinheit erzeugt ein (elektro)magnetisches Feld, das in den Sekundärwicklungen elektrische Spannungen induziert, die als Messsignale dienen. Diese elektrischen Spannungen werden als Messsignale vom Lagegeber ausgegeben und werden in einer nachgelagerten Auswerteeinheit ausgewertet, um daraus die Lageinformation zu ermitteln. Die Sekundärwicklungen sind üblicherweise so angeordnet, sodass die gemessenen Spannungen 90° phasenverschoben sind, weshalb die Messsignale oftmals auch als Sinus- und Cosinusspur bezeichnet werden. Es sind aber natürlich auch andere Winkel möglich. Die Amplituden der gemessenen Spannungen verlaufen damit als Sinusfunktion in Abhängigkeit von der Lage der Erregungseinheit zur Sekundärwicklung, bzw. als Cosinusfunktion bei der um 90° versetzt angeordneten Sekundärwicklung, oder allgemein als Sinusfunktion mit einem bestimmten Phasenversatz. Die Auswertung beider Messsignale, beispielsweise mittels der Arkustangensfunktion, ermöglicht eine eindeutige Berechnung der aktuellen Lage.

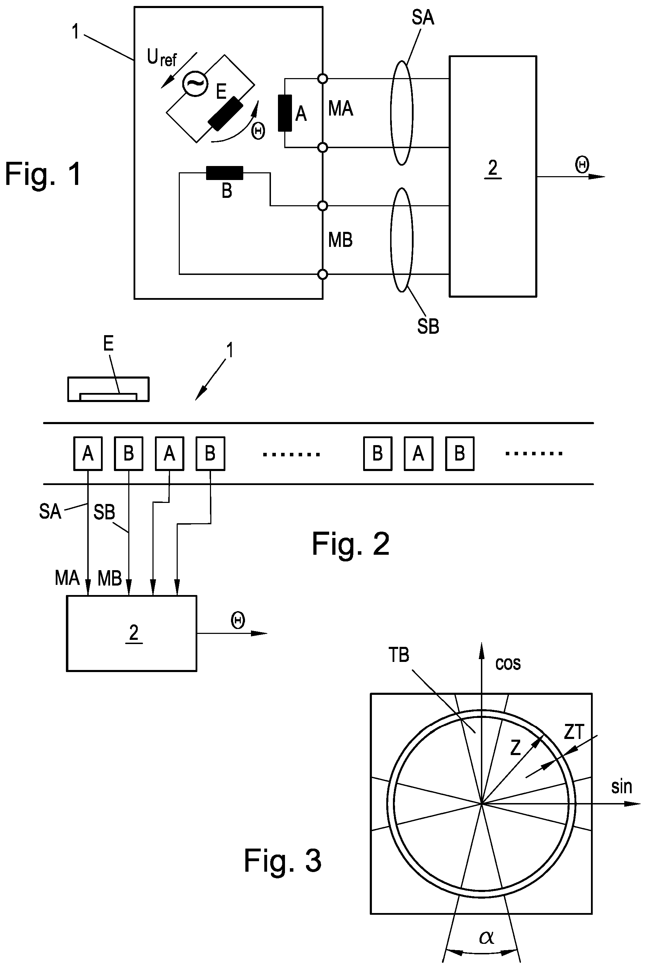

Oftmals ist bei einem Lagegeber auch eine Fehlererkennung implementiert, die üblicherweise auf die Zeigerlänge Z der Messsignale abstellt, wie in Fig.3 anhand eines rotatorischer Lagegebers erläutert wird. Die Zeigerlänge Z der Messsignale ist die vektorielle Addition des aktuellen Werts der Sinus- und Cosinus-Messsignale und kann beispielsweise als Summe der Quadrate der Amplituden der Messignale angegeben werden, auch als Quadratwurzel dieser Summe. Ein solcher Zeiger rotiert folglich mit der Relativposition des bewegten Teils des Lagegebers zum feststehenden Teil des Lagegebers, beispielsweise mit der Umdrehung des Rotors. Zur Fehlererkennung wird geprüft, ob der Zeiger innerhalb eines vorgegebenen Zeigertoleranzbandes ZT liegt (Fig.3). Das grundsätzliche bekannte Problem dabei ist, dass die Messsignale als Sinus- und Cosinus-Funktionen Nulldurchgänge aufweisen. In einer Periodendauer der Messsignale ergeben sich vier Nulldurchgänge. Im Bereich der Nulldurchgänge ist damit aber keine Fehlererkennung möglich, weil die Signalpegel eines Messsignals zu nieder sind, um verlässlich auf eine Zeigerlänge Z und auf einen Fehler schließen zu können. Mit üblichen Auflösungen einer Auswerteelektronik für die Messsignale ergeben sich um jeden Nulldurchgang eines Messsignals typische, für die Fehlererkennung tote Winkelbereiche TB der Zeiger, die im Bereich von $\alpha=30°$ bis 40° liegen können, wie in Fig.3 dargestellt ist. Damit ist die Fehlererkennung bei dieser herkömmlichen Vorgehensweise stark eingeschränkt. Diese toten Winkelbereiche TB können aufgrund der bei Verwendung entsprechend genauer Komponenten üblichen Toleranzen und Auflösungen der Auswerteelektronik zwar verkleinert werden (auf beispielsweise $\alpha=20°$), ganz eliminiert werden können diese tote Winkelbereiche TB aber nicht.

Aufgrund dieser toten Winkelbereiche TB kann ein Lagegeber auch nicht für eine sichere (im Sinne der funktionalen Sicherheit, beispielsweise eine Sicherheitsanforderungsstufe nach der Norm IEC 61508) verwendet werden. Die sichere Positionsbestimmung wäre damit auf die Bereiche zwischen den toten Winkelbereichen TB eingeschränkt, was aber für die meisten Anwendungen nicht ausreichend wäre.

Aus EP 2 078 933 A2 ist bekannt, zur Fehlererkennung in einem Resolver ein Störsignal auf eine Wicklung aufzuschalten und die Reaktion auf das Störsignal zur Fehlererkennung auszuwerten. Ähnliches zeigen die DE 10 2015 211 232 A1 und US 2017/0205458 A1, die jeweils das Einspeisen von Störsignalen in beide Wicklungen eines Resolvers beschreiben, wobei die Reaktionssignale einzeln und getrennt voneinander ausgewertet werden. Aufgrund der getrennten Auswertung der Reaktionssignale lassen sich bestimmte Fehler nicht oder nur sehr eingeschränkt erkennen, was die Sicherheit der Positionsbestimmung beeinträchtigt. Abgesehen davon, ist der Resolver dadurch auch empfindlich gegenüber externen, auf die Wicklungen wirkenden Störeinflüssen, wodurch ebenfalls die Sicherheit der Positionsbestimmung beeinträchtigt wird.

Es ist folglich eine Aufgabe der Erfindung, ein Verfahren anzugeben, mit dem eine sichere Positionsbestimmung für einen Lagegeber über den gesamten Bewegungsbereich möglich ist.

Diese Aufgabe wird erfindungsgemäß durch die Merkmale der unabhängigen Ansprüche gelöst. Das Reaktionssignal kann in jeder Lage des Lagegebers eindeutig und sicher erfasst werden, womit die toten Bereiche wie im Falle der bisher üblichen Zeigerauswertung wegfallen. Damit ist eine Fehlererkennung und eine sichere Positionsbestimmung über den gesamten Bewegungsbereich des Lagegebers möglich. Diese Art der Fehlererkennung kann daher insbesondere auch für eine funktional sichere Positionsbestimmung mit einem Lagegeber eingesetzt werden. Der Lagegeber selbst muss dafür nicht verändert werden, womit Standardbauteile verwendet werden können. Es ist lediglich eine zusätzliche Beschaltung erforderlich, die die Störsignale erzeugt und an die Sekundärwicklungen anlegt, um das Reaktionssignal zu erzeugen. Nachdem die Auswertung des Messsignals in der Auswerteeinheit üblicherweise ohnehin als Software implementiert ist, muss auch nur die Software in der Auswerteeinheit um die Funktion der Fehlererkennung ergänzt werden, was ebenso einfach zu realisieren ist. Gegebenenfalls sind in der Auswerteeinheit nur einfache Hardwarekomponenten, wie Filter, zusätzlich zu implementieren, sofern diese Funktionen nicht auch in Software ausgeführt sind.

In einer vorteilhaften, einfach zu realisierenden Ausführung, wird jedes Störsignal über einen Spannungsteiler an die Sekundärwicklung angelegt. Dabei ist es vorteilhaft, wenn der Spannungsteiler jeweils gebildet wird, indem eine Serienschaltung zumindest einer Einprägeimpedanz mit einer elektrischen Energiequelle (Spannungsquelle oder Stromquelle) parallel an die Wicklungsimpedanz der zumindest einen Sekundärwicklung geschaltet wird. Diese Schaltung ermöglicht das einfache aber sichere und genaue Erzeugen und Anlegen der Störsignale an die Sekundärwicklung.

Ein Fehler könnte erkannt werden, wenn sich das Reaktionssignal ändert. Hierfür wird das Reaktionssignal zu zumindest zwei unterschiedlichen Zeitpunkten, vorzugsweise laufend (kontinuierlich oder in vorgegebenen zeitlichen Abständen) erfasst, um eine Veränderung zu erkennen.

Wird als Störsignal ein Gleichspannungssignal verwendet und das Reaktionssignal als DC-Offset des Messsignals erfasst, könnte ein Fehler auch sicher erkannt werden, wenn sich der DC-Offset ändert.

Wird als Störsignal ein Wechselspannungssignal verwendet und aus dem Reaktionssignal eine Wicklungsimpedanz der Sekundärwicklung ermittelt, könnte ein Fehler auch sicher erkannt werden, wenn sich die Wicklungsimpedanz ändert. Hierfür wird die Wicklungsimpedanz zu zumindest zwei unterschiedlichen Zeitpunkten, vorzugsweise laufend (kontinuierlich oder in vorgegebenen zeitlichen Abständen) ermittelt, um eine Veränderung zu erkennen.

Erfindungsgemäß werden aber an zumindest zwei Sekundärwicklungen ein elektrisches Störsignal angelegt, sodass das elektrische Störsignal an der zugehörigen Sekundärwicklung jeweils ein Reaktionssignal auf der zugehörigen Signalleitung verursacht. Die Fehlererkennung erfolgt dann erfindungsgemäß mittels Vergleichs der zumindest zwei Reaktionssignale, wobei ein Fehler erkannt wird, wenn sich das Ergebnis des Vergleichs der zumindest zwei Reaktionssignale ändert. Als Vergleich wird vorzugsweise eine Differenz oder ein Quotient aus den zumindest zwei Reaktionssignalen verwendet. Hierfür wird der Vergleich zu zumindest zwei unterschiedlichen Zeitpunkten, vorzugsweise laufend (kontinuierlich oder in vorgegebenen zeitlichen Abständen) erfasst, um eine Veränderung zu erkennen. Die vergleichende Auswertung hat den Vorteil, dass äußere Einflüsse auf beide Sekundärwicklungen und Signalleitungen wirken, wie beispielsweise Temperatureinflüsse, Alterungseffekte und ähnliches, womit beide Reaktionssignale durch solche äußeren Einflüsse in etwa gleich beeinflusst werden und durch den Vergleich kompensiert werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 einen rotatorischen Lagegeber,
Fig.2 einen translatorischen Lagegeber,
Fig.3 die sich ergebenden toten Bereiche in der Fehlererkennung nach dem Stand der Technik,
Fig.4 eine Ausführung einer aus dem Stand der Technik bekannten Fehlererkennung,
Fig.5 eine Ausführung einer erfindungsgemäßen Fehlererkennung,
Fig.6 ein Reaktionssignal mit einem DC-Offset zur Fehlererkennung und
Fig.7 eine Ausführung einer Auswerteeinheit mit Fehlererkennung.

Ein Lagegeber 1 zur Positionsbestimmung ist hinlänglich bekannt und ist in einer beispielhaften Ausführung als rotatorischer Lagegeber (Resolver) in Fig.1 dargestellt. Der Lagegeber 1 kann aber auch als translatorischer Lagegeber ausgeführt sein, wie in Fig.2 angedeutet. Ein Lagegeber ist allgemein ein elektromagnetischer Messumformer zur Wandlung der Lage eines bewegten Bauteils relativ zu einem feststehenden Bauteil in eine elektrische Größe. Zur Positionsbestimmung sind sowohl am bewegten Bauteil, als auch am feststehenden Bauteil zusammenwirkende Teile des Lagegebers angeordnet oder mit zusammenwirkenden Teilen des Lagegebers verbunden.

Der Lagegeber 1 in der Ausführung nach Fig.1 hat als Erregungseinheit E eine Erregerwicklung, die mit einem Erregersignal $U_{ref}$ angeregt wird. Das Erregersignal $U_{ref}$ ist ein elektrisches Wechselsignal mit einer bestimmten Erregeramplitude R0 und Erregerkreisfrequenz ω, also z.B. $U_{ref}$=R0·cos(ωt), wobei t die Zeit bezeichnet. Die Erregerwicklung E wird üblicherweise mit einer elektrischen Wechselspannung als Erregersignal $U_{ref}$ mit einer Erregerfrequenz, typischerweise aber nicht einschränkend im Frequenzbereich von 1kHz bis 10kHz, beaufschlagt. Bewegt sich die Erregungseinheit E relativ zu einer Sekundärwicklung A, B des rotativen Lagegebers 1, so wird in der Sekundärwicklung A, B eine elektrische Spannung induziert, die abhängig von der Winkellage θ der jeweiligen Sekundärwicklung A, B zur Erregungseinheit E ist und die vom rotativen Lagegeber 1 als Messsignale MA, MB ausgegeben werden.

Die beiden Sekundärwicklungen A, B sind örtlich versetzt zueinander angeordnet, üblicherweise um 90° zueinander verdreht, und die Erregungseinheit E, die an einem rotierenden Bauteil angeordnet sein kann, rotiert im rotativen Lagegeber 1. Die ausgegebenen Messsignale MA, MB werden in einer Auswerteeinheit 2 ausgewertet, um daraus die Winkellage θ zu ermitteln.

Die in den Sekundärwicklungen A, B des rotatorischen Lagegebers 1 gemessenen, aufgrund des rotierenden Magnetfeldes der Erregungseinheit E induzierten Spannungen pulsieren mit der gleichen Frequenz wie das Erregersignal $U_{ref}$, ihre Amplituden sind jedoch von der Stellung der Erregerwicklung E zur jeweiligen Sekundärwicklung A, B, und damit von der Winkellage θ des Rotors, abhängig. Bei den Messsignalen MA, MB handelt es sich um eine Amplitudenmodulation einer mit der Frequenz des Erregersignals schwingenden elektrischen Größe. Die eigentliche Lageinformation liegt somit in der Hüllkurve der Messsignale MA, MB, die aus den ausgegebenen Messsignalen extrahiert wird. Die Hüllkurve entspricht der Sinusfunktion (bzw. Cosinusfunktion) der gemessenen Spannung, wobei die Periodendauer einer Umdrehung der Erregungseinheit E entspricht und die Periodendauer damit von der Winkelgeschwindigkeit der Erregungseinheit E abhängig ist.

In einer einfachen Ausführung eines rotatorischen Lagegebers 1 kann aber anstelle der Erregerwicklung als Erregungseinheit E auch ein Permanentmagnet verwendet werden. Die Messsignale MA, MB sind dann nicht amplitudenmoduliert, sondern ergeben sich direkt als Sinus oder Cosinus.

Der rotative Lagegeber 1 ist mit Signalleitungen SA, SB mit der Auswerteeinheit 2 verbunden sein, über die jeweils ein Messsignal MA, MB zur Auswerteeinheit 2 übertragen wird. Die Auswerteeinheit 2 kann aber auch im Lagegeber 1 integriert sein, wobei in diesem Fall die Signalleitungen SA, SB im rotativen Lagegeber 1 vorgesehen wären.

Die Erregungseinheit E ist mit einem rotierenden Bauteil verbunden, beispielsweise mit einer Motorwelle eines Elektromotors, und die Sekundärwicklungen A, B sind an einem ortsfesten Bauteil angeordnet, beispielsweise an einem Gehäuse des rotativen Lagegebers 1, das wiederum an einem Motorgehäuse des Elektromotors angeordnet sein kann. Die Erregungseinheit E rotiert damit mit dem rotierenden Bauteil mit und rotiert relativ zu den feststehenden Sekundärwicklungen A, B.

Bei einem rotativen Lagegeber 1 und einem Erregersignal $U_{ref}$=R0·cos(φ), mit Erregerfrequenz φ=ωt, sowie einer 90° versetzten Anordnung der Sekundärwicklungen A, B ergeben sich die Messsignale MA, MB beispielsweise zu

$$MA = R0 \cdot u \cdot \cos(\theta) \cdot \cos(\varphi - \Delta\varphi)$$

$$MB = R0 \cdot u \cdot \sin(\theta) \cdot \cos(\varphi - \Delta\varphi)$$

Darin bezeichnet u ein bekanntes Übertragungsverhältnis des rotativen Lagegebers 1 und Δφ eine Verzögerung, die sich im Wesentlichen aus einer Laufzeit des rotativen Lagegebers 1 und der Aufbereitung und Auswertung der Messsignale MA, MB in der Auswerteeinheit 2 (z.B. durch Filter, Recheneinheiten und Ähnliches) ergibt. θ bezeichnet die Winkellage der Erregerwicklung E bezogen auf die Sekundärwicklungen A, B (angedeutet in Fig.1) und damit die eigentliche interessierende, zu bestimmende Position. Die Winkellage θ kann in bekannter Weise beispielsweise als Arkustangens der Amplituden der Messsignale MA, MB ermittelt werden. Diese Auswertung erfolgt in der Auswerteeinheit 2, beispielsweise durch Demodulation der Messsignale MA, MB, womit die Frequenzanteile des Erregersignals $U_{ref}$ entfernt werden, oder durch geeignete Abtastung der Messsignale MA, MB.

Der Lagegeber 1 kann auch als translatorischer Lagegeber ausgeführt sein, wie in Fig.2 dargestellt. Bei einem translatorischen Lagegeber 1 sind eine Vielzahl von Sekundärwicklungen SW in Form von Spulen nebeneinander angeordnet. Als Erregungseinheit E für die Sekundärwicklungen SW wird ein Erregungsmagnet, beispielsweise ein Permanentmagnet oder eine Erregerwicklung EW (Erregerspule), verwendet, der ein (elektro) magnetisches Erregerfeld erzeugt. Wird die Erregungseinheit E an den Sekundärwicklungen SW vorbeibewegt, wird darin eine elektrische Spannung induziert, die als Messsignal ausgegeben wird. Die Sekundärwicklungen SW sind so angeordnet, dass wieder um 90° versetzte Messsignale MA, MB in Form einer Sinus- und Cosinusspur erzeugt werden. Die Messsignale MA, MB werden über Signalleitungen SA, SB an eine Auswerteeinheit 2 übermittelt, in der die Messsignale MA, MB zur Bestimmung der Position ausgewertet werden. Die Messsignale MA, MB ergeben sich dabei beispielsweise zu

$$MA = u \cdot \cos(\theta)$$

$$MB = u \cdot \sin(\theta)$$

Darin bezeichnet u wieder ein bekanntes Übertragungsverhältnis des translatorischen Lagegebers 1. θ bezeichnet die relative Lage der Erregungseinheit E bezogen auf zwei nebeneinander angeordneten Sekundärwicklungen A, B und damit die eigentliche interessierende, zu bestimmende Position. θ steht für einen Winkel im Bereich von 0 - 360°, der in eine relative Position zwischen Erregungseinheit E und Sekundärwicklungen A, B umgerechnet werden kann. Die Lage θ kann in bekannter Weise beispielsweise als Arkustangens der Amplituden der Messsignale MA, MB ermittelt werden. Diese Auswertung erfolgt in der Auswerteeinheit 2, beispielsweise durch geeignete Abtastung der Messsignale MA, MB.

Die Erregungseinheit E des translatorischen Lagegebers ist üblicherweise mit einem bewegten Bauteil verbunden, beispielsweise mit einem Läufer eines Linearmotors, und die Sekundärwicklungen A, B sind an einem ortsfesten Bauteil angeordnet, beispielsweise an einem Stator eines Linearmotors. Die Erregungseinheit E bewegt sich dann mit dem bewegten Bauteil mit und bewegt sich translatorisch relativ zu den feststehenden Sekundärwicklungen A, B.

Im Betrieb des Lagegebers 1 kann es zu Fehlern kommen, insbesondere zu einem Kabelbruch einer Signalleitung SA, SB, einem Kurzschluss zwischen den Signalleitungen SA, SB, einem Kurzschluss in einer Sekundärwicklung A, B oder eine Änderung eines Übertragungsverhältnisses u in einem Messsignal MA, MB. Solche Fehler beeinflussen nachvollziehbar die Positionsbestimmung und führen in der Regel dazu, dass keine Lage θ mehr ermittelt werden kann oder die ermittelte Lage θ falsche Werte liefert. Es ist daher erwünscht, Fehler in der Positionsbestimmung, die von einem Fehler im Lagegeber 1 selbst oder in einer Signalleitung SA, SB zwischen dem Lagegeber 1 und der Auswerteeinheit 2 verursacht werden, zu erkennen. Eine solche Fehlererkennung ist insbesondere für eine sichere Positionsbestimmung im Sinne der funktionalen Sicherheit wichtig.

Zur Fehlererkennung wird in ein vom Lagegeber 1 ausgegebenen Messsignal MA, MB ein definiertes elektrisches Signal eingeprägt. Dazu wird ein elektrisches Störsignal SS an der dem Messsignal MA, MB zugehörigen Sekundärwicklung A, B angelegt, was ein elektrisches Reaktionssignal $RS_A$, $RS_B$ auf der zugehörigen Signalleitung SA, SB verursacht, das dem Messsignal MA, MB überlagert ist. Das Reaktionssignal $RS_A$, $RS_B$ ist damit abhängig von der Wicklungsimpedanz $XS_A$, $XS_B$ der jeweiligen Sekundärwicklung A, B. Nachdem das Reaktionssignal $RS_A$, $RS_B$ dem zugehörigen

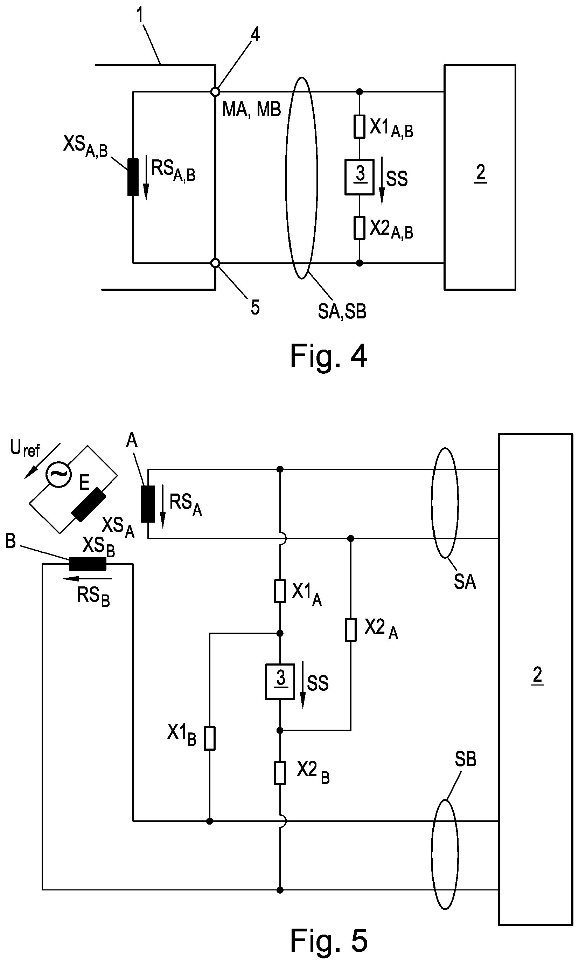

Messsignal MA, MB überlagert ist, gelangt es auch in die Auswerteeinheit 2, in der das Reaktionssignal $RS_A$, $RS_B$ zur Fehlererkennung ausgewertet wird. Dieses Prinzip ist in Fig.4 dargestellt.

Das Reaktionssignal $RS_A$, $RS_B$ kann in der Auswerteeinheit 2 vom Messsignal MA, MB getrennt werden, beispielsweise durch geeignete Filter oder Demodulation, sodass eine getrennte Auswertung des eigentlichen Nutzsignals zur Positionsbestimmung und des Reaktionssignals $RS_A$, $RS_B$ möglich ist. Dazu wird das Störsignal SS geeignet gewählt, sodass das eigentliche Nutzsignal des Lagegebers 1, das Messsignal MA, MB, möglichst unbeeinflusst bleibt und das Nutzsignal und das Reaktionssignal $RS_A$, $RS_B$ sich in der Auswerteeinheit 2 gut trennen lassen. Dazu ist beispielsweise die Frequenz des Störsignals und/oder die Störsignalamplitude geeignet zu wählen.

In vorteilhafter Ausgestaltung wird das Störsignal SS mittels eines Spannungsteilers an zumindest eine Sekundärwicklung A, B angelegt, wie in Fig.4 dargestellt ist.

Eine elektrische Energiequelle 3, entweder eine Spannungsquelle oder Stromquelle, erzeugt das definierte elektrische Störsignal SS. Eine Serienschaltung aus der elektrischen Energiequelle 3 und zumindest einer Einprägeimpedanz $X1_A$, $X1_B$, $X2_A$, $X2_B$ ist parallel an die Anschlüsse 4, 5 der Sekundärwicklung A, B, geschaltet. Die Energiequelle 3 und die zumindest eine Einprägeimpedanz $X1_A$, $X1_B$, $X2_A$, $X2_B$ kann in der Auswerteeinheit 2 oder im Lagegeber 1 integriert sein, oder kann auch davon getrennt ausgeführt sein. An die Anschlüsse 4, 5 der Sekundärwicklung A, B ist auch die Signalleitung SA, SB angeschlossen, über die das Messsignal MA, MB an die Auswerteeinheit 2 übertragen wird. Vorteilhaft ist zwischen jedem der beiden Anschlüsse 4, 5 und der Energiequelle 3 eine Einprägeimpedanz $X1_A$, $X1_B$, $X2_A$, $X2_B$ geschaltet (wie im Ausführungsbeispiel der Fig.4), sodass sich eine Serienschaltung aus der Energiequelle 3 und zwei Einprägeimpedanzen $X1_A$, $X2_A$, $X1_B$, $X2_B$ ergibt.

Durch die oben beschriebene Beschaltung der Sekundärwicklung A, B entsteht ein Spannungsteiler zwischen der zumindest einen Einprägeimpedanz $X1_A$, $X1_B$, $X2_A$, $X2_B$ und der Wicklungsimpedanz $XS_A$, $XS_B$ der Sekundärwicklung A, B, in die das Störsignal SS eingespeist. In der Wicklungsimpedanz $XS_A$, $XS_B$ ist auch der Teil der Signalleitungen SA, SB zwischen Einprägung des Störsignals SS und der Sekundärwicklung A, B enthalten. Durch den Spannungsteiler entsteht an der Wicklungsimpedanz $X_S$ der Sekundärwicklung A, B das Reaktionssignal $RS_A$, $RS_B$ in Form einer elektrischen Spannung, die bei gegebenem Störsignal SS und gegebenen Einprägeimpedanz $X1_A$, $X1_B$, $X2_A$, $X2_B$ von der Wicklungsimpedanz $XS_A$, $XS_B$ der Sekundärwicklung A, B abhängig ist. Das Reaktionssignal $RS_A$, $RS_B$ ist damit abhängig von der Wicklungsimpedanz $XS_A$, $XS_B$ der Sekundärwicklung A, B. Das Reaktionssignal $RS_A$, $RS_B$ kann somit zur Fehlererkennung verwendet werden.

In einem definierten Ausgangszustand - gegeben durch ein vorgegebenes Störsignal SS, bekannten Einprägeimpedanzen $X1_A$, $X1_B$, $X2_A$, $X2_B$ und einer vorhandenen Wicklungsimpedanz $XS_A$, $XS_B$ der Sekundärwicklung A, B - stellt sich ein anfängliches Reaktionssignal $RS_A$, $RS_B$ ein. Ändert sich durch einen Fehler im Lagegeber 1 die Wicklungsimpedanz $XS_A$, $XS_B$ der Sekundärwicklung A, B, beispielsweise durch einen (Teil-)Wicklungsschluss in der Sekundärwicklung A, B, einem Kabelbruch der Signalleitung SA, SB (zwischen dem Einprägen des Störsignals SS und der Sekundärwicklung A, B), einem Kurzschluss zwischen den Signalleitungen SA, SB (zwischen dem Einprägen des Störsignals SS und der Sekundärwicklung A, B) oder einer Änderung des Übertragungsverhältnisses, so ändert sich auch das Reaktionssignal $RS_A$, $RS_B$. Diese Änderung des Reaktionssignals $RS_A$, $RS_B$ (oder einer davon abgeleiteten Größe) kann in der Auswerteeinheit 2, oder einer Fehlererkennungseinheit 6, erfasst werden und damit auf einen Fehler im Lagegeber 1 geschlossen werden. Dieser erkannte Fehler kann in geeigneter und erforderlicher Weise weiterverarbeitet werden, beispielsweise signalisiert werden oder an eine übergeordnete Steuereinheit, beispielsweise eine Servosteuereinheit eines Servomotors, weitergeleitet werden. Diese Fehlererkennung ist damit unabhängig vom Messsignal MA, MB.

Obwohl das Störsignal SS auch nur an einer Sekundärwicklung A, B angelegt werden kann, ist es erfindungsgemäß vorgesehen, dass ein Störsignal SS an mehrere zu überwachende, vorzugsweise an alle, Sekundärwicklungen A, B des Lagegebers 1 angelegt wird (wie in Fig.5 am Beispiel eines Resolvers dargestellt), vorzugsweise mittels eines Spannungsteilers wie oben beschrieben. Hierfür kann eine gemeinsame Energiequelle 3 (Spannungsquelle oder Stromquelle) verwendet werden, oder für jedes Störsignal oder mehrere Störsignale eine separate Energiequelle 3. Im Falle eines Spannungsteilers ist parallel an jede überwachte Sekundärwicklung A, B eine Serienschaltung einer Energiequelle 3 und zumindest einer Einprägeimpedanz $X1_A$, $X2_A$, $X1_B$, $X2_B$ angeschlossen. Damit entsteht an den Sekundärwicklungen A, B, an die das Störsignal SS angelegt wird, ein entsprechendes Reaktionssignal $RS_A$, $RS_B$. Es ist aber nicht notwendig, dass das Störsignal SS für jede Sekundärwicklung A, B, gleich ist.

Die Energiequelle 3 kann auch einstellbar sein, um das Störsignal SS an den jeweiligen Lagegeber 1 anpassen zu können. Die Energiequelle 3 kann dazu als steuerbare Stromquelle oder steuerbare Spannungsquelle ausgeführt sein. Es kann zu diesem Zweck auch eine Konstantstromquelle oder Konstantspannungsquelle mit einem einstellbaren Widerstand verwendet werden.

Das Störsignal SS kann ein elektrisches Gleichspannungssignal (DC) sein oder ein elektrisches Wechselspannungssignal (AC).

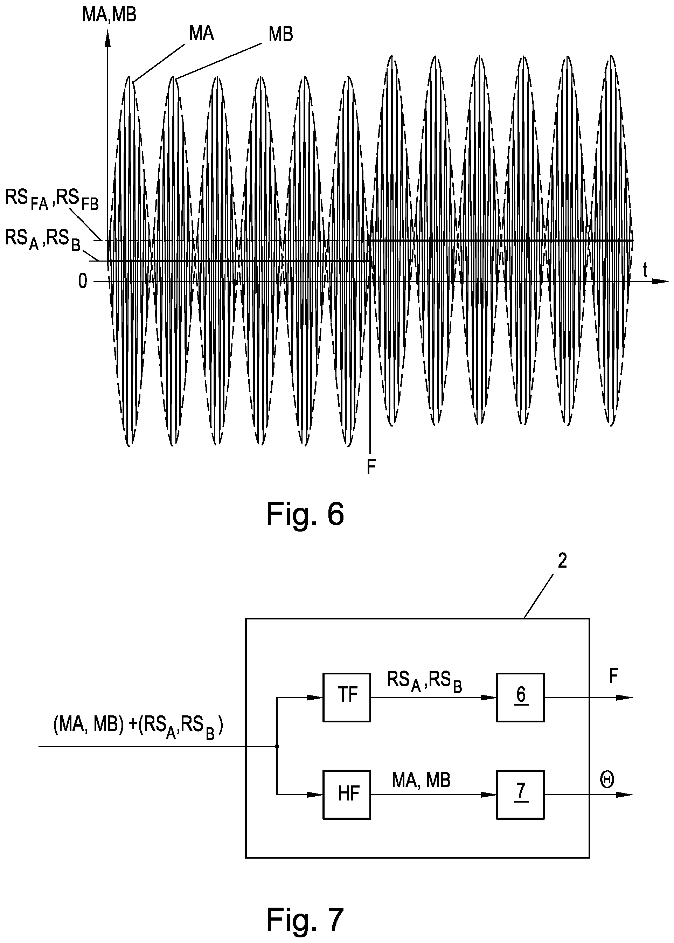

Im Falle eines Gleichspannungssignals als Störsignal SS wird als Einprägeimpedanz $X1_A$, $X2_A$, $X1_B$, $X2_B$ vorteilhaft ein ohmscher Widerstand verwendet und für die Fehlerauswertung werden vorzugsweise nur die ohmschen Anteile der jeweiligen Wicklungsimpedanz $X_{SA}$, $X_{SB}$ verwendet. Das Reaktionssignal $RS_A$, $RS_B$ ist in diesem Fall ein Gleichspannungsoffset (DC-Offset) des Messsignals MA, MB, wie in Fig.6 dargestellt. Die Fig.6 zeigt ohne Einschränkung der Allgemeinheit ein amplitudenmoduliertes Messsignal MA, MB eines Resolvers als Lagegeber 1. Zum Zeitpunkt $t_F$ kommt es zu einem der oben erwähnten Fehlern F, was eine Änderung des Reaktionssignals $RS_A$, $RS_B$ auf ein Fehler Reaktionssignal $RS_{FA}$, $RS_{FB}$ zur Folge hat - in diesem Falle eine Änderung des DC-Offsets. Diese Änderung des DC-Offsets kann in der Auswerteeinheit 2 erfasst und ausgewertet werden.

In einer möglichen Ausführung wird das Messsignal MA, MB mit dem überlagerten Reaktionssignal $RS_A$, $RS_B$ in der Auswerteeinheit 2 durch geeignete Filterung aufgetrennt, wie in Fig.7 dargestellt. In einem Tiefpassfilter TF wird das Reaktionssignal $RS_A$, $RS_B$ gewonnen und in einem Hochpassfilter HF das Messsignal MA, MB. Die Grenzfrequenzen der Filter sind natürlich entsprechend zu wählen. Das Reaktionssignal $RS_A$, $RS_B$ wird einer Fehlererkennungseinheit 6 zugeführt und das Messsignal MA, MB einer Positionsbestimmungseinheit 7. Die Positionsbestimmungseinheit 7 ermittelt die Position $\theta$ in bekannter Weise, beispielsweise wie oben ausgeführt. Die Fehlererkennungseinheit 6 kann laufend prüfen, ob der aktuelle DC-Offset einen vorgegebenen Grenzwert überschreitet. Ist das der Fall, wird auf einen Fehler F geschlossen.

Im Falle eines Wechselspannungssignals als Störsignal SS wird als Einprägeimpedanz $X1_A$, $X2_A$, $X1_B$, $X2_B$ vorzugsweise ein Kondensator, oder auch eine Spule, verwendet, die mit der jeweiligen Sekundärwicklung A, B und deren Wicklungsimpedanz $XS_A$, $XS_B$ einen komplexen Spannungsteiler ausbilden. Die Frequenz des Störsignals SS ist dabei geeignet zu wählen, insbesondere so, dass die Frequenz nicht in Konflikt mit der Positionsbestimmung gerät. Im Falle eines Resolvers mit einer Erregerwicklung als Lagegeber 1 wir die Frequenz des Störsignals SS beispielsweise deutlich größer als die Erregerfrequenz des Resolvers. Im Falle eines Permanentmagneten als Erregungseinheit E beispielsweise deutlich größer als die zu erwartende größte Nutzfrequenz des Lagegebers 1, die sich beispielsweise aus der spezifizierten (beispielsweise im Datenblatt des Lagegebers) maximal zulässigen Drehzahl des rotatorischer Lagegeber 1 oder der maximal zulässigen Geschwindigkeit des translatorischen Lagegeber 1 abgeleitet werden kann.

Die Auftrennung des Nutzsignals des Lagegebers 1 und des Reaktionssignals $RS_A$, $RS_B$ in der Auswerteeinheit 2 im Falle eines Wechselspannungssignals als Störsignal SS erfolgt beispielsweise durch Demodulation des Messsignals MA, MB und des höherfrequenten Reaktionssignals $RS_A$, $RS_B$, was wiederum eine Auftrennung der Signale zur Folge hat. Beispielsweise kann die Demodulation mit dem bekannten I&Q-Verfahren (In-Phase-&-Quadrature-Verfahren) erfolgen, wobei es natürlich noch eine Fülle anderer Demodulationsverfahren gibt. Auch eine Auftrennung durch Filterung ist natürlich möglich. Mit dem Reaktionssignal $RS_A$, $RS_B$ kann die Wicklungsimpedanz $XS_A$, $XS_B$ ermittelt werden, beispielsweise in der Fehlererkennungseinheit 6. Durch die bekannte Einprägeimpedanz $X1_A$, $X1_B$, $X2_A$, $X2_B$ und dem bekannten Störsignal SS kann beispielsweise aus der Amplitude des Reaktionssignals $RS_A$, $RS_B$ mittels des komplexen Spannungsteilers auf die Wicklungsimpedanz $XS_A$, $XS_B$ rückgerechnet werden. Ändert sich die Wicklungsimpedanz $XS_A$, $XS_B$ um einen bestimmten, vorgegebenen Wert (auch als relative Angabe, z.B. in Prozent), kann auf einen Fehler F geschlossen werden, was in der Fehlererkennungseinheit 6 geprüft werden kann.

Die Fehlererkennungseinheit 6 und/oder die Positionsbestimmungseinheit 7 kann sowohl als analoge Schaltung ausgeführt sein, als auch digital. Im Falle einer digitalen Ausführung wird das Messsignals MA, MB mit dem überlagerten Reaktionssignal $RS_A$, $RS_B$ (in einer Ausführung auch erst nach einer Auftrennung) in geeigneter Weise digitalisiert, beispielsweise mit einem Analog-Digital-Wandler, und in einem Mikroprozessor oder einem integrierten Schaltkreis, wie einem Field Programmable Gate Array (FPGA) oder einer anwendungsspezifischen integrierten Schaltung (ASIC) ausgewertet.

Wenn, wie erfindungsgemäß vorgesehen, ein Störsignal SS an zumindest zwei Sekundärwicklungen A, B angelegt wird, dann werden die bewirkten Reaktionssignale $RS_A$, $RS_B$ durch Vergleich ausgewertet. Der Vergleich wird in der Fehlererkennungseinheit 6 durchgeführt. Das kann sowohl bei einem Gleichspannungssignal als Störsignal SS, als auch bei einem Wechselspannungssignal als Störsignal SS angewendet werden. Für den Vergleich kann in der Auswerteeinheit 2 beispielsweise die Differenz ($RS_A$ - $RS_B$) oder der Quotient ($RS_A$ / $RS_B$) der Reaktionssignale $RS_A$, $RS_B$ ermittelt werden (analog oder digital) und die Differenz oder der Quotient zur Fehlererkennung genutzt werden. Hierbei ist es jedoch egal, welches Reaktionssignale $RS_A$, $RS_B$ der Minuend und welches der Subtrahend ist, auch der Absolutwert der Subtraktion kann verwendet werden. Genauso ist es egal, welches Reaktionssignale $RS_A$, $RS_B$ der Dividend und welches der Divisor ist.

Beispielsweise kann ein Fehler erkannt werden, wenn sich das Ergebnis des Vergleichs, z.B. eine Differenz oder ein Quotient der Reaktionssignale $RS_A$, $RS_B$, ändert.

Die vergleichende Auswertung hat den Vorteil, dass äußere Einflüsse auf beide Sekundärwicklungen A, B und Signalleitungen SA, SB wirken, wie beispielsweise Temperatureinflüsse, Alterungseffekte und ähnliches, womit beide Reaktionssignale $RS_A$, $RS_B$ durch solche äußeren Einflüsse in etwa gleich beeinflusst werden und durch den Vergleich, insbesondere die Differenz- oder Quotientenbildung, kompensiert werden.

Bei der vergleichenden Auswertung kann auf einen Fehler geschlossen werden, wenn der sich aus dem Vergleich ergebende Unterschied einen bestimmten vorgegebenen Wert überschreitet.

Wenn im Lagegeber 1 mehr als zwei Sekundärwicklungen A, B vorgesehen sind und an alle Sekundärwicklungen A, B ein Störsignal angelegt wird, dann kann die vergleichende Auswertung für eine Gruppe von Sekundärwicklungen A, B kreuzweise erfolgen. Dabei wird der Vergleich jedes Reaktionssignals $RS_A$, $RS_B$ mit jedem anderen Reaktionssignal $RS_A$, $RS_B$ in der Gruppe durchgeführt und ausgewertet.

Unter dem Erkennen einer Änderung einer bestimmten Größe, beispielsweise eines Reaktionssignals $RS_A$, $RS_B$, oder eines DC-Offsets eines Reaktionssignals $RS_A$, $RS_B$, oder einer Wicklungsimpedanz $XS_A$, $X_{SB}$, oder eines Ergebnisses eines Vergleichs (z.B. Differenz, Quotient) zwischen zwei Reaktionssignalen $RS_A$, $RS_B$, kann beispielsweise verstanden werden, dass geprüft wird, ob sich der jeweilige Wert der Größe um einen bestimmten, vorgegebenen Betrag verändert, beispielsweise um $\pm 10\%$, oder ob ein vorgegebener Grenzwert für die bestimmte Größe überschritten wird. Um eine Änderung zu erkennen wird die bestimmte Größe zumindest zweimal ermittelt, vorzugsweise laufend, was entweder kontinuierlich erfolgen kann oder in vorgegebenen zeitlichen Abständen.

**Patentansprüche**

1.  Verfahren zur Fehlererkennung beim Betreiben eines Lagegebers (1) mit zumindest zwei Sekundärwicklungen (A, B), in die im Betrieb des Lagegebers (1) von einer Erregungseinheit (E) jeweils ein elektrisches Messsignal (MA, MB) induziert wird und die Messsignale (MA, MB) über jeweils eine Signalleitung (SA, SB) an eine Auswerteeinheit (2) übergeben werden und in der Auswerteeinheit (2) ausgewertet werden, wobei an zumindest zwei Sekundärwicklungen (A, B) ein elektrisches Störsignal (SS) angelegt wird, sodass das jeweilige elektrische Störsignal (SS) an der jeweiligen Sekundärwicklung (A, B) jeweils ein dem jeweiligen Messsignal (MA, MB) überlagertes Reaktionssignal ($RS_A$, $RS_B$) auf der zugehörigen Signalleitung (SA, SB) verursacht, und wobei die Reaktionssignale ($RS_A$, $RS_B$) in der Auswerteeinheit (2) zur Fehlererkennung ausgewertet werden, **dadurch gekennzeichnet, dass** die zumindest zwei Reaktionssignale ($RS_A$, $RS_B$) miteinander verglichen werden und ein Fehler erkannt wird, wenn sich das Ergebnis des Vergleichs der zumindest zwei Reaktionssignale ($RS_A$, $RS_B$) ändert.

**2.** Verfahren nach Anspruch 1, **dadurch gekennzeichnet, dass** das Störsignal (SS) über einen Spannungsteiler an die jeweilige Sekundärwicklung (A, B) angelegt wird.

**3.** Verfahren nach Anspruch 2, **dadurch gekennzeichnet, dass** jeder Spannungsteiler gebildet wird, indem eine Serienschaltung zumindest einer Einprägeimpedanz ($X1_A$, $X1_B$, $X2_A$, $X2_B$) mit einer elektrischen Energiequelle (3) parallel an die Wicklungsimpedanz ($XS_A$, $XS_B$) der jeweiligen Sekundärwicklung (A, B) geschaltet wird.

**4.** Verfahren nach Anspruch 1, **dadurch gekennzeichnet, dass** als Vergleich eine Differenz oder ein Quotient aus den zumindest zwei Reaktionssignalen ($RS_A$, $RS_B$) ermittelt wird und ein Fehler erkannt wird, wenn sich die Differenz oder der Quotient der zumindest zwei Reaktionssignale ($RS_A$, $RS_B$) ändert.

**5.** Anordnung zur Positionserfassung mit Fehlererkennung mit einem Lagegeber (1) und einer Auswerteeinheit (2), wobei der Lagegeber (1) zumindest zwei Sekundärwicklungen (A, B) und eine Erregungseinheit (E) umfasst und jede Sekundärwicklung (A, B) über eine Signalleitung (SA, SB) mit der Auswerteeinheit (2) verbunden ist, wobei im Betrieb des Lagegebers (1) die Erregungseinheit (E) jeweils ein elektrisches Messsignal (MA, MB) in den zumindest zwei Sekundärwicklungen (A, B) induziert und die Auswerteeinheit (2) die über die Signalleitungen (SA, SB) erhaltenen Messsignale (MA, MB) zur Positionsbestimmung auswertet, und wobei eine elektrische Energiequelle (3) vorgesehen ist, die ein definiertes elektrisches Störsignal (SS) erzeugt, und ausgebildet ist, an zumindest zwei Sekundärwicklungen (A, B) ein elektrisches Störsignal (SS) anzulegen, sodass das jeweilige elektrische Störsignal (SS) an der jeweiligen Sekundärwicklung (A, B) jeweils ein dem jeweiligen Messsignal (MA, MB) überlagertes Reaktionssignal ($RS_A$, $RS_B$) auf der zugehörigen Signalleitung (SA, SB) verursacht, **dadurch gekennzeichnet, dass** die Fehlererkennungseinheit (6) ausgebildet ist, zumindest zwei Reaktionssignale ($RS_A$, $RS_B$) miteinander zu vergleichen und einen Fehler zu erkennen, wenn sich das Ergebnis des Vergleichs der zumindest zwei Reaktionssignale ($RS_A$, $RS_B$) ändert.

**6.** Anordnung nach Anspruch 5, **dadurch gekennzeichnet, dass** die elektrische Energiequelle (3) jedes Störsignal (SS) über einen Spannungsteiler an die jeweilige Sekundärwicklung (A, B) anlegt.

**7.** Anordnung nach Anspruch 6, **dadurch gekennzeichnet, dass** für jede Sekundärwicklung (A, B), an der ein Störsignal (SS) anzulegen ist, eine Serienschaltung zumindest einer Einprägeimpedanz ($X1_A$, $X1_B$, $X2_A$, $X2_B$) mit der elektrische Energiequelle (3) vorgesehen ist, die jeweils zur Ausbildung eines Spannungsteilers parallel an die Wicklungsimpedanz ($XS_A$, $XS_B$) der jeweiligen Sekundärwicklung (A, B) geschaltet ist, um das Störsignal (SS) über einen Spannungsteiler an die jeweilige Sekundärwicklung (A, B) anzulegen.

**Claims**

**1.** Method for detecting errors when operating a position encoder (1) comprising at least two secondary windings (A, B), into each of which an electrical measurement signal (MA, MB) is induced by an excitation unit (E) during operation of the position encoder (1), and the measurement signals (MA, MB) are each transmitted via a signal line (SA, SB) to an evaluation unit (2) and are evaluated in the evaluation unit (2), wherein an electrical interference signal (SS) is applied to at least two secondary windings (A, B), so that the relevant electrical interference signal (SS) at the relevant secondary winding (A, B) in each case generates, on the associated signal line (SA, SB), a response signal ($RS_A$, $RS_B$) superimposed on the relevant measurement signal (MA, MB), and wherein the response signals ($RS_A$, $RS_B$) are evaluated for error detection in the evaluation unit (2), **characterized in that** the at least two response signals ($RS_A$, $RS_B$) are compared with each other, and an error is detected if the result of the comparison of the at least two response signals ($RS_A$, $RS_B$) changes.

**2.** Method according to claim 1, **characterized in that** the interference signal (SS) is applied to the respective secondary winding (A, B) via a voltage divider.

**3.** Method according to claim 2, **characterized in that** each voltage divider is formed by a series connection of at least one injection impedance ($X1_A$, $X1_B$, $X2_A$, $X2_B$) with an electrical energy source (3) being connected in parallel to the winding impedance ($XS_A$, $XS_B$) of the respective secondary winding (A, B).

**4.** Method according to claim 1, **characterized in that** a difference or a quotient of the at least two response signals ($RS_A$, $RS_B$) is determined as the comparison, and an error is detected if the difference or the quotient of the at least two response signals ($RS_A$, $RS_B$) changes.

**5.** Arrangement for position detection with error detection, having a position encoder (1) and an evaluation unit (2), wherein the position encoder (1) comprises at least two secondary windings (A, B) and an excitation unit (E), and each secondary winding (A, B) is connected to the evaluation unit (2) via a signal line (SA, SB), wherein during operation of the position encoder (1) the excitation unit (E) induces a relevant electrical measurement signal (MA, MB) in each of the at least two secondary windings (A, B) and the evaluation unit (2) evaluates, for position determination, the measurement signals (MA, MB) obtained via the signal lines (SA, SB), wherein an electrical energy source (3) is provided which generates a defined electrical interference signal (SS), and wherein it is arranged to apply an electrical interference signal (SS) to at least two secondary windings (A, B), so that the relevant electrical interference signal (SS) at the relevant secondary winding (A, B) in each case generates, on the associated signal line (SA, SB), a response signal ($RS_A$, $RS_B$) superimposed on the relevant measurement signal (MA, MB), **characterized in that** the error detection unit (6) is arranged to compare the at least two response signals ($RS_A$, $RS_B$) to each other and to detect an error if the result of the comparison of the at least two response signals ($RS_A$, $RS_B$) changes.

6. Arrangement according to claim 5, **characterized in that** the electrical energy source (3) applies each interference signal (SS) to the respective secondary winding (A, B) via a voltage divider.

7. Arrangement according to claim 6, **characterized in that** for each secondary winding (A, B), onto which an interference signal (SS) is to be applied, a series connection of at least one injection impedance ($X1_A$, $X1_B$, $X2_A$, $X2_B$) with the electrical energy source (3) is provided which, in order to form a voltage divider, is in each case connected in parallel to the winding impedance ($XS_A$, $XS_B$) of the respective secondary winding (A, B) in order to apply the interference signal (SS) to the respective secondary winding (A, B) via a voltage divider.

**Revendications**

1. Procédé de détection de défaut lors du fonctionnement d'un capteur de position (1) doté d'au moins deux enroulements secondaires (A, B), dans lesquels, pendant le fonctionnement du capteur de position (1), un signal de mesure électrique (MA, MB) est respectivement induit par une unité d'excitation (E), et les signaux de mesure (MA, MB) sont transmis par l'intermédiaire d'une ligne de signal respective (SA, SB) à une unité d'évaluation (2) et sont évalués dans l'unité d'évaluation (2), un signal parasite électrique (SS) étant appliqué à au moins deux enroulements secondaires (A, B), de sorte que le signal parasite électrique respectif (SS) sur l'enroulement secondaire respectif (A, B) provoque respectivement un signal de réaction ($RS_A$, $RS_B$) superposé au signal de mesure respectif (MA, MB) sur la ligne de signal associée (SA, SB), et les signaux de réaction ($RS_A$, $RS_B$) étant évalués dans l'unité d'évaluation (2) pour la détection de défaut, **caractérisé en ce que** lesdits au moins deux signaux de réaction ($RS_A$, $RS_B$) sont comparés l'un à l'autre et **en ce qu'**un défaut est détecté lorsque le résultat de la comparaison desdits au moins deux signaux de réaction ($RS_A$, $RS_B$) change.

2. Procédé selon la revendication 1, **caractérisé en ce que** le signal parasite (SS) est appliqué à l'enroulement secondaire respectif (A, B) par l'intermédiaire d'un diviseur de tension.

3. Procédé selon la revendication 2, **caractérisé en ce que** chaque diviseur de tension est formé en connectant en parallèle un montage en série d'au moins une impédance d'insertion ($X1_A$, $X1_B$, $X2_A$, $X2_B$) et d'une source d'énergie électrique (3) à l'impédance d'enroulement ($XS_A$, $XS_B$) de l'enroulement secondaire respectif (A, B).

4. Procédé selon la revendication 1, **caractérisé en ce qu'**en tant que comparaison, une différence ou un quotient est déterminé à partir desdits au moins deux signaux de réaction ($RS_A$, $RS_B$) et **en ce qu'**un défaut est détecté lorsque la différence ou le quotient desdits au moins deux signaux de réaction ($RS_A$, $RS_B$) change.

5. Dispositif de détection de position avec détection de défaut doté d'un capteur de position (1) et d'une unité d'évaluation (2), le capteur de position (1) comprenant au moins deux enroulements secondaires (A, B) et une unité d'excitation (E) et chaque enroulement secondaire (A, B) étant relié à l'unité d'évaluation (2) par l'intermédiaire d'une ligne de signal (SA, SB), dans lequel, pendant le fonctionnement du capteur de position (1), l'unité d'excitation (E) induit respectivement un signal de mesure électrique (MA, MB) dans lesdits au moins deux enroulements secondaires (A, B) et l'unité d'évaluation (2) évalue les signaux de mesure (MA, MB) reçus par l'intermédiaire des lignes de signal (SA, SB) pour déterminer la position, et il est prévu une source d'énergie électrique (3) qui génère un signal parasite électrique (SS) défini, et qui est conçue pour appliquer un signal parasite électrique (SS) auxdits au moins deux enroulements secondaires (A, B), de sorte que le signal parasite électrique respectif (SS) sur l'enroulement secondaire respectif (A, B) provoque respectivement un signal de réaction ($RS_A$, $RS_B$) superposé au signal de mesure respectif (MA, MB) sur la ligne de signal associée (SA, SB), **caractérisé en ce que** l'unité de détection de défaut (6) est configurée pour comparer l'un à l'autre lesdits au moins deux signaux de réaction ($RS_A$, $RS_B$) et pour détecter un défaut si le résultat de la comparaison desdits au moins deux signaux de réaction (RS$_A$, RS$_B$) change.

6. Dispositif selon la revendication 5, **caractérisé en ce que** la source d'énergie électrique (3) applique chaque signal parasite (SS) à l'enroulement secondaire respectif (A, B) par l'intermédiaire d'un diviseur de tension.

7. Dispositif selon la revendication 6, **caractérisé en ce que**, pour chaque enroulement secondaire (A, B) auquel un signal parasite (SS) doit être appliqué, il est prévu un montage en série d'au moins une impédance d'insertion (X1$_A$, X1$_B$, X2$_A$, X2$_B$) et de la source d'énergie électrique (3) qui est respectivement connecté en parallèle à l'impédance d'enroulement (XS$_A$, XS$_B$) de l'enroulement secondaire respectif (A, B) pour former un diviseur de tension, afin d'appliquer le signal parasite (SS) à l'enroulement secondaire respectif (A, B) par l'intermédiaire d'un diviseur de tension.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2078933 A2
- DE 102015211232 A1

- US 20170205458 A1